# EUROPEAN PATENT APPLICATION

(11) **EP 3 421 326 A1**
(43) Date of publication of application: **02.01.2019**
(21) Application number: 17779203.3
(22) Date of filing: 06.04.2017
(51) Int. Cl.: B62D 1/184

(54) **POSITION ADJUSTMENT DEVICE FOR STEERING WHEEL**

(30) Priority: 08.04.2016 JP 2016078330
(71) Applicant: NSK Ltd., Tokyo 141-8560 (JP)
(72) Inventor: KUROKAWA Yoshifumi, Maebashi-shi Gunma 371-8527 (JP)
(74) Representative: Naylor, Matthew John
(86) International application number: PCT/JP2017/014348
(87) International publication number: WO 2017/175825

(57) **Abstract**

The lock mechanism has a fixed-side engagement part and a moveable-side lock member. The fixed-side engagement part is provided directly or via another member to a bracket, which has the long hole for adjustment formed therein, of the fixed-side bracket or the displacement bracket. The moveable-side lock member has a moveable-side engagement part capable of friction engagement or concave-convex engagement with the fixed-side engagement part, and is supported to the adjustment rod in a state where the moveable-side lock member can be synchronously displaced in the position adjustment direction and in a rotation direction about a central axis of the adjustment rod. When switching from the unlocked state to the locked state, the moveable-side lock member rotates in a locking direction, so that the fixed-side engagement part and the moveable-side engagement part are friction-engaged or concave-convex-engaged so as to prevent displacement of the adjustment rod in the position adjustment direction. When switching from the locked state to the unlocked state, the moveable-side lock member rotates in an unlocking direction, so that the friction engagement or the concave-convex engagement between the fixed-side engagement part and the moveable-side engagement part is released.

## Description

### TECHNICAL FIELD

The present invention relates to improvements on a position adjustment device for steering wheel. The position adjustment device for steering wheel has a function of adjusting a position in a front and rear direction or a vertical position of a steering wheel for steering an automobile, for example.

### RELATED ART

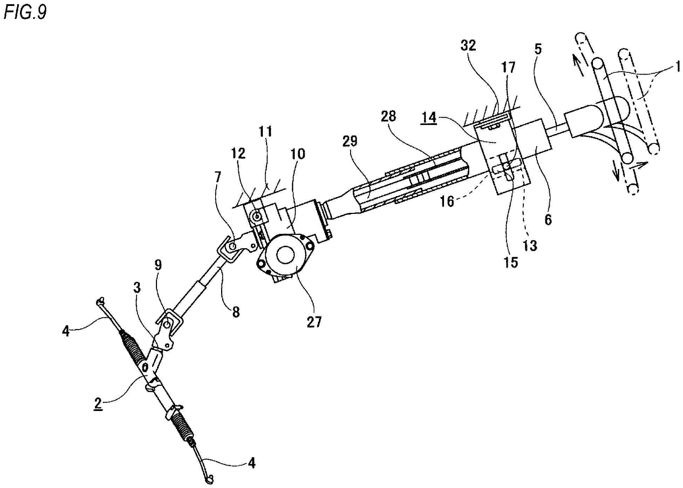

A steering device for automobile is configured as shown in FIG. 9, for example. The steering device for automobile is configured to transmit rotation of a steering wheel 1 to an input shaft 3 of a steering gear unit 2, and to push and pull a pair of left and right tie-rods 4, 4 in association with rotation of the input shaft 3, thereby applying a steering angle to front wheels. The steering wheel 1 is supported and fixed to a rear end portion of a steering shaft 5. The steering shaft 5 is rotatably supported to a cylindrical steering column 6 with being inserted in the steering column 6 in an axial direction. Also, a front end portion of the steering shaft 5 is connected to a rear end portion of an intermediate shaft 8 via a universal joint 7. A front end portion of the intermediate shaft 8 is connected to the input shaft 3 via a separate universal joint 9.

Regarding the steering device configured as described above, a steering device including a tilt mechanism for adjusting a vertical position of the steering wheel 1 and a telescopic mechanism for adjusting a position in a front and rear position in correspondence to a physique and a driving posture of a driver has been known (for example, refer to Patent Document 1).

In the shown structure, in order to configure the tilt mechanism, an upper front end portion of a housing 10 fixed to a front end portion of the steering column 6 is supported to a vehicle body 11 so that it can oscillate and be displaced by a tilt shaft 12 arranged in a width direction (the width direction indicates a width direction of the vehicle body and coincides with the left and right direction. This applies to the specification and the claims, too.). Also, a displacement bracket 13 is provided on a lower surface of an axially intermediate part of the steering column 6. A support bracket 14 is provided with clamping the displacement bracket 13 from both sides in the width direction. A pair of left and right support plate parts 22, 22 configuring the support bracket 14 is respectively formed with long holes 15 for tilt adjustment, which are long in a vertical direction. The displacement bracket 13 is formed at portions, which align with portions of both the long holes 15 for tilt adjustment, with long holes 16 for telescopic adjustment. An adjustment rod 17 is inserted in the long holes 15 for tilt adjustment and the long holes 16 for telescopic adjustment in the width direction. Also, in order to configure a telescopic mechanism, the steering shaft 5 and the steering column 6 are configured to be expanded and contracted, and the long holes 16 for telescopic adjustment are configured as long holes, which are long in a front and rear direction. When an adjustment lever (not shown) provided at one end portion of the adjustment rod 17 is operated, a force of clamping the displacement bracket 13 from both sides in the width direction by the support bracket 14 is adjusted, so that a state (unlocked state) in which a position of the steering wheel 1 can be adjusted and a state (locked state) in which the steering wheel can be kept at a position after adjustment are switched each other.

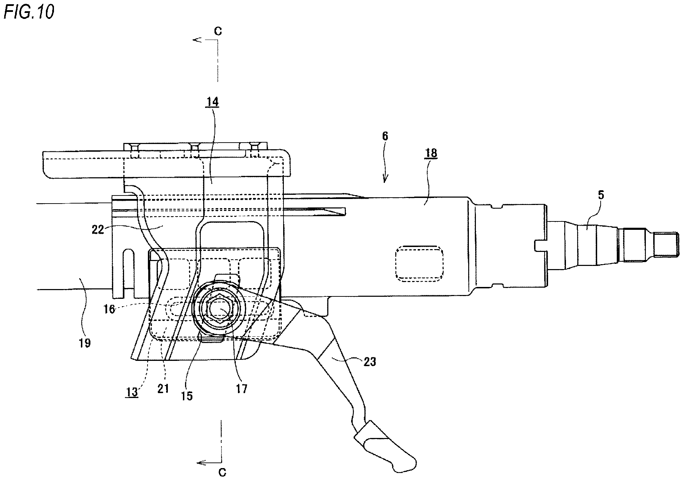

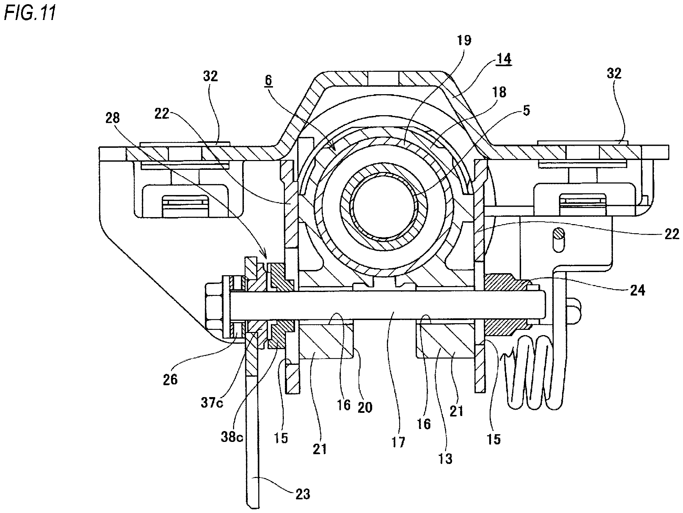

A more specific structure of the steering device is described with reference to FIGS. 10 and 11.

A front part of an outer column 18 arranged at a rear side of the steering column 6 and a rear part of an inner column 19 arranged at a front side are slidably fitted, so that an entire length of the steering column 6 can be extended or shortened. For example, the front part of the outer column 18 manufactured by die-casting a light alloy is provided with a slit 20, so that an inner diameter of the front part can be elastically expanded and contracted. Also, a pair of left and right clamped plate parts 21, 21 is provided at parts at which the slit 20 is clamped from both the left and right sides, and the displacement bracket 13 is configured by both the clamped plate parts 21, 21. Also, the pair of clamped parts 21, 21 is formed with long holes 16, 16 for telescopic adjustment, which are long in the front and rear direction. Also, a pair of left and right support plate parts 22, 22 provided to the support bracket 14 is arranged at parts at which the displacement bracket 13 is clamped from both the left and right sides. The pair of support plate parts 22, 22 is formed with long holes 15, 15 for tilt adjustment, each of which has a partial arc shape about a tilt shaft 12 (refer to FIG. 9) and is long in the vertical direction. The adjustment rod 17 is inserted into both the long holes 15, 15 for tilt adjustment and both the long holes 16, 16 for telescopic adjustment in the width direction.

One axial end portion (a left end portion in FIG. 11) of the adjustment rod 17 is provided with an adjustment lever 23. The other axial end portion (a right end portion in FIG. 11) is provided with a nut 24. A part of the adjustment rod, which is close to one end of an axially intermediate part, is provided with a cam device 57 configured by a thrust bearing 26, a drive-side cam 37c and a driven-side cam 38c. An interval between inner surfaces of the pair of support plate parts 22, 22 is expanded and reduced on the basis of oscillation of the adjustment lever 23.

When adjusting a position of the steering wheel 1, the adjustment lever 23 is caused to oscillate in a predetermined direction (in general, downward) to rotate the drive-side cam 37c in an unlocking direction, which is a rotation direction upon switching to the unlocked state. Then, an axial dimension of the cam device 57 is reduced and an interval between the driven-side cam 38c and the nut 24 is expanded. As a result, surface pressures of contact parts between the inner surfaces of the pair of support plate parts 22, 22 and outer surfaces of the pair of clamped parts 21, 21 are reduced or lost, the inner diameter of the front end portion of the outer column 18 is elastically enlarged, and a surface pressure of a contact part between an inner peripheral surface of the front end portion of the outer column 18 and an outer peripheral surface of the rear end portion of the inner column 19 is reduced. In this state, a position of the steering wheel 1 can be adjusted in the vertical direction and in the front and rear direction within a range in which the adjustment rod 17 can move in both the long holes 15, 15 for tilt adjustment and both the long holes 16, 16 for telescopic adjustment.

In order to keep the steering wheel 1 at a desired position, the steering wheel 1 is moved to the desired position and the adjustment lever 23 is then caused to oscillate in a reverse direction (generally, upward). Thereby, the drive-side cam 37c is rotated in a locking direction, which is a rotation direction upon switching to the lock state. Then, the axial dimension of the cam device 57 is enlarged, and the interval between the inner surfaces of the pair of support plate parts 22, 22 is reduced. In this state, the surface pressures of the contact parts between the inner surfaces of the pair of support plate parts 22, 22 and the outer surfaces of the pair of clamped parts 21, 21 are increased, the inner diameter of the front end portion of the outer column 18 is elastically reduced, and the surface pressure of the contact part between the inner peripheral surface of the front end portion of the outer column 18 and the outer peripheral surface of the rear end portion of the inner column 19 is increased. As a result, it is possible to keep the steering wheel 1 at a position after the adjustment.

According to the steering device configured as described above, the vertical position and the position in the front and rear direction of the steering wheel 1 are kept at the positions after the adjustment by a frictional force that is applied between the pair of support plate parts 22, 22 and the pair of clamped parts 21, 21, and the like. However, for example, from a standpoint of securely protecting a driver upon a secondary collision and the like, there are needs for a structure capable of more firmly keeping the position of the steering wheel 1.

### Citation List

### Patent Document

Patent Document 1: JP-A-2009-227181

### SUMMARY OF THE INVENTION

### Problems To Be Solved By the Invention

The present invention has been made in view of the above situations, and is to implement a structure capable of firmly keeping a position of a steering wheel in a state where a vertical position or a position in a front and rear direction of the steering wheel can be kept at a position after adjustment.

### Means For Solving Problems

A position adjustment device for steering wheel of the present invention includes a displacement bracket, a fixed-side bracket, an adjustment rod, a pair of pressing parts, and an expansion/contraction device.

The displacement bracket is fixed to a steering column and is formed with a first through-hole.

The fixed-side bracket has a pair of support plate parts provided with clamping the displacement bracket from both sides in a width direction, is formed with a pair of second through-holes, and is fixed to a vehicle body side.

The adjustment rod is provided with being inserted in the first through-hole and the pair of second through-holes in the width direction.

The pair of pressing parts is provided at both end portions of the adjustment rod, which protrude from outer surfaces of the pair of support plate parts.

The expansion/contraction device is configured to expand and contract an interval between the pair of pressing parts.

Also, at least one through-hole of the first through-hole and the pair of second through-holes is configured as a long hole for adjustment that is long in a position adjustment direction, which is a direction in which a position of the steering wheel can be adjusted. In the meantime, the position adjustment direction is a front and rear direction when a position of the steering wheel is to be adjusted by a telescopic mechanism, and is a vertical direction when the position of the steering wheel is to be adjusted by a tilt mechanism.

An unlocked state in which the steering wheel can be positionally adjusted in the position adjustment direction and a locked state in which the steering wheel can be kept at a position after adjustment can be switched each other on the basis of expansion/contraction of the expansion/contraction mechanism.

In particular, the position adjustment device for steering wheel of the present invention includes a lock mechanism configured to prevent the displacement bracket from being displaced relative to the fixed-side bracket in the position adjustment direction, in the locked state.

The lock mechanism includes a fixed-side engagement part and a moveable-side lock member.

The fixed-side engagement part is provided directly or via another member to a bracket, which has the long hole for adjustment formed therein, of the fixed-side bracket or the displacement bracket.

The moveable-side lock member has a moveable-side engagement part capable of friction engagement or concave-convex engagement with the fixed-side engagement part, and is supported to the adjustment rod in a state where the moveable-side lock member can be synchronously displaced in the position adjustment direction and in a rotation direction about a central axis of the adjustment rod.

When switching from the unlocked state to the locked state, the moveable-side lock member rotates in a locking direction, so that the fixed-side engagement part and the moveable-side engagement part are friction-engaged or concave-convex-engaged so as to prevent displacement of the adjustment rod in the position adjustment direction.

On the other hand, when switching from the locked state to the unlocked state, the moveable-side lock member rotates in an unlocking direction, so that the friction engagement or the concave-convex engagement between the fixed-side engagement part and the moveable-side engagement part is released.

When implementing the position adjustment device for steering wheel of the present invention, in the locked state, a rotating force in the locking direction may be applied to the moveable-side lock member, based on a force to be applied to the adjustment rod in the position adjustment direction (for example, an impact force that is to be applied in association with leaning against a steering wheel upon a secondary collision or when a driver gets in or off a vehicle).

When implementing the position adjustment device for steering wheel of the present invention, a part, which is to align in the position adjustment direction with an engagement part between the fixed-side engagement part and the moveable-side engagement part in the locked state, of the moveable-side lock member may be configured to have a thickness (wedge shape), which increases in a direction perpendicular to the position adjustment direction as a distance from the central axis of the adjustment rod in the position adjustment direction increases, and to generate a wedge effect between the fixed-side engagement part and the adjustment rod on the basis of a force to be applied to the adjustment rod in the position adjustment direction.

When implementing the position adjustment device for steering wheel of the present invention, the moveable-side lock member may be arranged with being retained in the width direction between an outer surface in the width direction of at least one support plate of the pair of support plate parts configuring the fixed-side bracket and a pressing part, which is provided at an outer side of the one support plate part in the width direction, of the pair of pressing parts or between an inner surface of the one support plate part in the width direction and an outer surface of the displacement bracket in the width direction facing the inner surface of the one support plate part in the width direction.

When implementing the position adjustment device for steering wheel of the present invention, the fixed-side engagement part may be configured by a fixed-side friction surface (a flat surface, a flat surface subjected to a surface treatment, or the like) formed to be parallel in the position adjustment direction.

The moveable-side engagement part may be configured so that a distance from the central axis of the adjustment rod increases from a position, at which the moveable-side engagement part is to be friction-engaged with the fixed-side engagement part in the locked state, toward an opposite direction to the locking direction.

When implementing the position adjustment device for steering wheel of the present invention, the fixed-side engagement part may be configured by a first fixed-side engagement part and a second fixed-side engagement part, and the moveable-side engagement part may be configured by a first moveable-side engagement part and a second moveable-side engagement part.

In the locked state, the first moveable-side engagement part and the first fixed-side engagement part may be engaged, and the second moveable-side engagement part and the second fixed-side engagement part may be engaged.

When implementing the position adjustment device for steering wheel of the present invention, the moveable-side lock member may have an elastic arm part, and the moveable-side lock member may be supported to the adjustment rod via the elastic arm part (may be supported to the adjustment rod so as to be relatively rotatable within an elasticity range of a pair of elastic arm parts).

### Effects of the Invention

According to the position adjustment device for steering wheel of the present invention, it is possible to firmly keep a position of the steering wheel in the state (locked state) where the vertical position or the position in the front and rear direction of the steering wheel can be kept at a position after adjustment.

That is, according to the present invention, in the locked state, the fixed-side engagement part provided directly (or indirectly) to the bracket, which has the long hole for adjustment formed therein, of the fixed-side bracket and the displacement bracket and the moveable-side engagement part of the moveable-side lock member supported to the adjustment rod so as to be synchronously displaceable in the position adjustment direction are engaged with each other (friction engagement or concave-convex engagement) so as to prevent displacement of the adjustment rod in the position adjustment direction. For this reason, in the locked state, even when an impact load is applied to the steering wheel in the position adjustment direction, it is possible to prevent the steering wheel from being displaced in the position adjustment direction on the basis of the engagement.

### BRIEF DESCRIPTION OF THE DRAWINGS

FIG. 1 is a view similar to FIG. 11, depicting a first example of an embodiment of the present invention.
FIG. 2A depicts a lock mechanism in an unlocked state, as seen from an outer side in a width direction, and FIG. 2B depicts a locked state.
FIG. 3 is a sectional view taken along a line A-A of FIG. 2A.
FIG. 4 is a view similar to FIG. 1, depicting a second example of the embodiment of the present invention.
FIG. 5A is a view similar to FIG. 2A, depicting a third example of the embodiment of the present invention, and FIG. 5B is a view similar to FIG. 2B.
FIG. 6A is a view similar to FIG. 2A, depicting a fourth example of the embodiment of the present invention, and FIG. 6B is a view similar to FIG. 2B.
FIG. 7A depicts a lock mechanism in the unlocked state of a fifth example of the embodiment of the present invention, as seen from the outer side in the width direction, and FIG. 7B depicts the locked state.
FIG. 8 is a sectional view taken along a line B-B of FIG. 7.
FIG. 9 is a partial side view depicting an example of the conventional structure of a steering device.
FIG. 10 is a partial side view for illustrating a specific structure of the steering device.
FIG. 11 is a sectional view taken along a line C-C of FIG. 10.

### DETAILED DESCRIPTION OF EMBODIMENTS

### [First Example of Embodiment]

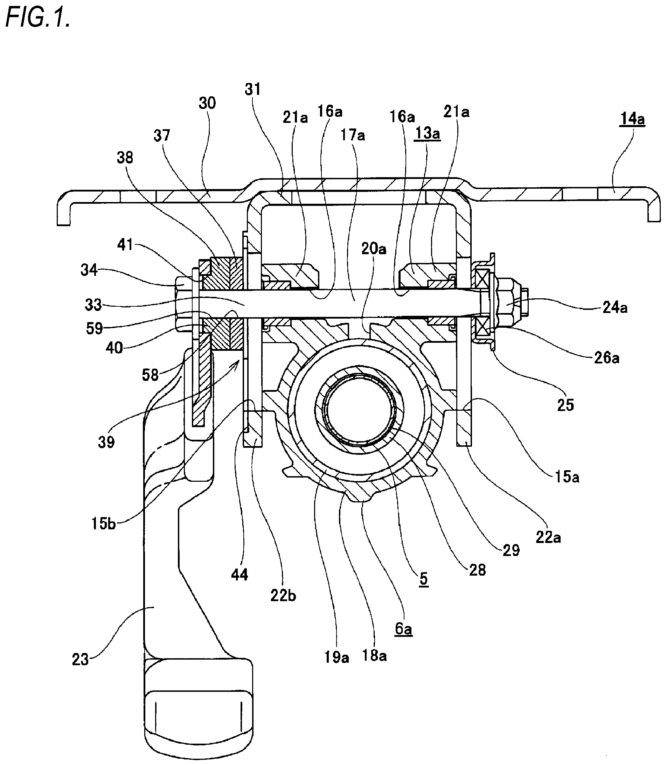

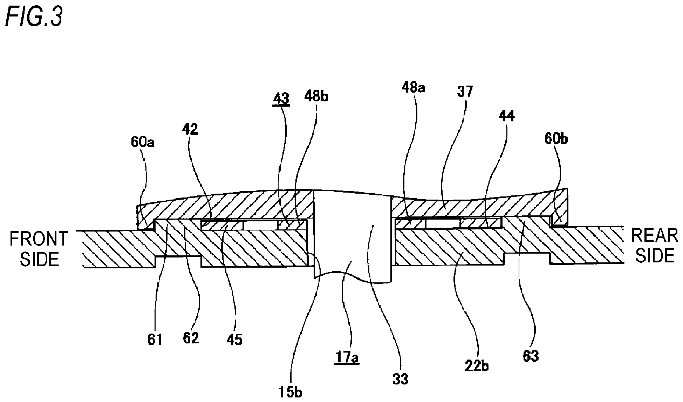

A first example of an embodiment of the present invention will be described with reference to FIGS. 1 to 3. A basic structure of a steering device to which a position adjustment device for steering wheel of the first example can be applied is substantially similar to the structure of the steering device shown in FIG. 9.

That is, a steering device to which a position adjustment device for steering wheel of the first example can be applied is configured to transmit rotation of a steering wheel 1 (refer to FIG. 9) to an input shaft 3 of a steering gear unit 2 and to push and pull a pair of left and right tie-rods 4, 4 via a rack and pinion mechanism in association with rotation of the input shaft 3, thereby applying a steering angle to wheels.

The steering wheel 1 is supported and fixed to a rear end portion of a steering shaft 5. The steering shaft 5 is rotatably supported to a cylindrical steering column 6a with being inserted in the steering column 6a in an axial direction. Also, as shown in FIG. 9, a front end portion of the steering shaft 5 is connected to a rear end portion of an intermediate shaft 8 via a universal joint 7. A front end portion of the intermediate shaft 8 is connected to the input shaft 3 via a separate universal joint 9. Also, in order to apply a steering auxiliary force to the steering shaft 5, an electric motor 27 (refer to FIG. 9), which is a power source, is provided in front of the steering column 6a.

The steering shaft 5 having the rear end portion to which the steering wheel 1 is supported and fixed is configured to adjust a position of an outer shaft 28 in a front and rear direction by spline-engaging a front end portion of the outer shaft 28 provided at a rear side (a right side in FIG. 9) and a rear end portion of an inner shaft 29 provided at a front side (a left side in FIG. 9). The steering shaft 5 is supported only to be rotatable inside the steering column 6a via a single row deep groove ball bearing (not shown) or the like.

A front part of an outer column 18a arranged at a rear side of the steering column 6a and a rear part of an inner column 19a arranged at a front side are slidably fitted, so that an entire length of the steering column 6a can be extended or shortened. For example, an upper end portion of the front part of the outer column 18a manufactured by die-casting a light alloy is provided with a slit 20a, so that an inner diameter of the front part can be elastically expanded and contracted. Also, a pair of left and right clamped plate parts 21a, 21a is provided at parts at which the slit 20a is clamped from both the left and right sides, and a displacement bracket 13a is configured by the pair of clamped parts 21a, 21a. Also, the pair of clamped parts 21, 21a is formed with long holes 16a, 16a for telescopic adjustment, which are long in the front and rear direction.

Also, a housing 10 (refer to FIG .9) is fixed to a front end portion of the steering column 6a (the inner column 19a). An upper front end portion of the housing 10 is supported to a vehicle body 11 by a tilt shaft 12 arranged in the width direction in a state where vertical oscillation about the tilt shaft 12 is possible. Also, a worm decelerator having a worm and a worm wheel, and the like (not shown) configuring an electric assist mechanism are arranged in the housing 10. Based on torque applied to an inner shaft 29, the worm is rotatively driven by the electric motor 27 fixed to the housing 10, so that the auxiliary steering force is applied to the steering shaft 5.

Also, a support bracket 14a is provided with clamping the displacement bracket 13a from both sides in the width direction. The support bracket 14a has an attachment plate part 30 provided at an upper part and a pair of left and right support plate parts 22a, 22b hanging down from the attachment plate part 30. In the first example, upper end edges of the pair of support plate parts 22a, 22b are made to be continuous by a coupling plate part 31, and an upper surface of the coupling plate part 31 is fixed to a lower surface of a central portion of the attachment plate part 30 in the width direction by welding. The support bracket 14a is supported to the vehicle body via a pair of separation capsules 32, 32 (refer to FIG. 11) by the attachment plate part 30 so that it can be separated forward upon a secondary collision.

Also, the pair of support plate parts 22a, 22b is formed with a pair of long holes 15a, 15b for tilt adjustment, each of which has a partial arc shape about the tilt shaft 12 and is long in the vertical direction. In the meantime, the pair of long holes 15a, 15b for tilt adjustment may also be formed to have a rectangular shape, which is long in the vertical direction, other than the partial arc shape. In the first example, the pair of long holes 16a, 16b for telescopic adjustment corresponds to the first through-hole defined in the claims, and the pair of long holes 15a, 15b for tilt adjustment corresponds to the second through-holes defined in the claims. Also, the pair of long holes 15a, 15b for tilt adjustment corresponds to the long hole for adjustment defined in the claims, and the formation direction (vertical direction) of the pair of long holes 15a, 15b for tilt adjustment corresponds to the position adjustment direction defined in the claims.

By the above configuration, it is possible to adjust the vertical position of the steering wheel 1, based on oscillation and displacement about the tilt shaft 12, and to adjust the position in the front and rear direction of the steering wheel 1, based on the expansion and contraction of the steering shaft 5 and the steering column 6a.

An adjustment rod 17a is inserted in the pair of long holes 15a, 15b for tilt adjustment and the pair of long holes 16a, 16b for telescopic adjustment in the width direction. The adjustment rod 17a has a male screw part (not shown) formed at one axial end portion (a right end portion in FIG. 1), a non-circular part 33 formed at an axially intermediate part, and a head part 34 formed at the other axial end portion (a left end portion in FIG. 1).

The non-circular part 33 is provided from a part of the adjustment rod 17a, which is arranged at an inner side of the other (left, in FIG. 1) long hole 15b for tilt adjustment of the pair of long holes 15a, 15b for tilt adjustment, to a part adjacent to an inner surface of the head part 34 in the width direction.

Specifically, the non-circular part 33 has a pair of flat surface parts 35a, 35b formed by cutting two positions on an outer peripheral surface opposite to each other in a radial direction into a flat surface shape, and a pair of pressing curved surface parts 36a, 36b formed between the pair of flat surface parts 35a, 35b in a circumferential direction of the adjustment rod 17a and having an arc-shaped section about a central axis of the non-circular part 33. A sectional shape of the non-circular part 33 has twofold symmetry (a shape that overlaps itself when rotated by 180°). A distance between the pair of flat surface parts 35a, 35b is smaller than a distance between apexes of the pair of pressing curved surface parts 36a, 36b.

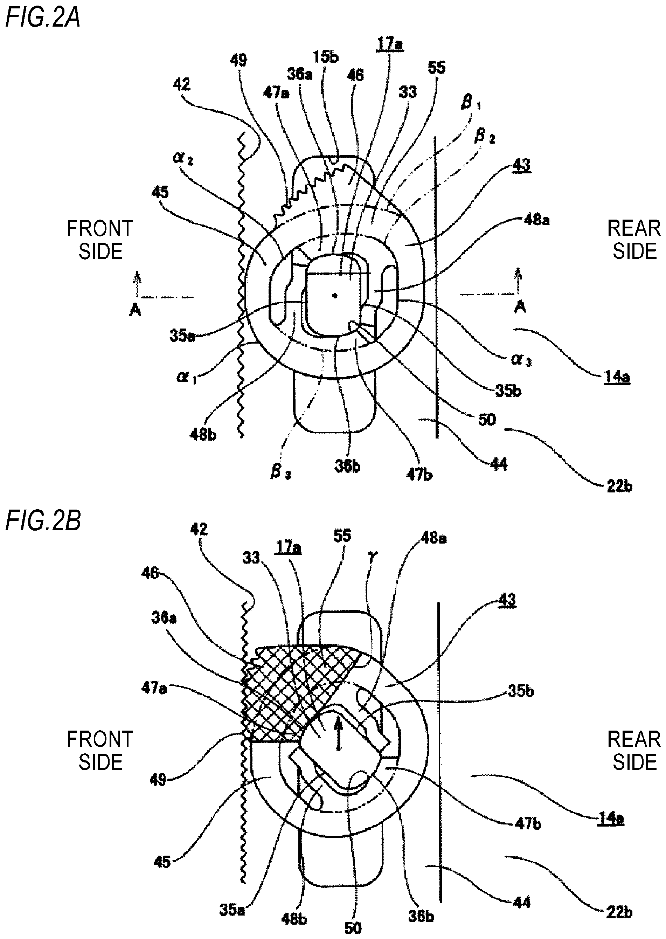

In the first example, in a state (unlocked state) shown in FIG. 2A where a position of the steering wheel can be adjusted, the pair of flat surface parts 35a, 35b is arranged to be parallel (including substantially parallel) with the formation direction (vertical direction) of the pair of long holes 15a, 15b for tilt adjustment. In the meantime, the non-circular part 33 may be provided within any range of the adjustment rod 17a inasmuch as it includes a part to be arranged at an inner side of a support hole 50 configuring a moveable-side lock member 43, which will be described later. For example, a part of the adjustment rod 17a except the male screw part and the head part 34 may be configured as the non-circular part 33 over an entire length thereof. Also, the non-circular part may be formed by externally fitting and fixing a cylinder-shaped member, which is provided separately from the adjustment rod 17a and has a pair of flat surface parts and a pair of pressing curved surface parts provided on an outer peripheral surface thereof, to an outer peripheral surface of the axially intermediate part of the adjustment rod 17a.

Also, in the first example, a pressing plate 25 and a thrust bearing 26a are arranged in corresponding order from one support plate part 22a between a nut 24a screwed to the male screw part of the adjustment rod 17a and the one (right, in FIG. 1) support plate part 22a of the pair of support plate parts 22a, 22b.

Also, a driven-side cam 37, a drive-side cam 38, an adjustment lever 23 and a lock mechanism 39 are arranged between the head part 34 of the adjustment rod 17a and the other (left, in FIG. 1) support plate part 22b of the pair of support plate parts 22a, 22b.

The driven-side cam 37 configures a cam device corresponding to the expansion/contraction mechanism defined in the claims, together with the drive-side cam 38. Also, the driven-side cam 37 is made of sintered metal, for example, is formed with a central hole 58 for inserting therein the adjustment rod 17a, and has a circular ring plate shape as a whole. Also, the driven-side cam 37 has a driven-side cam surface, which is a circumferential concave-convex surface, on an outer surface (left surface, in FIG. 1) in the width direction. Also, an inner surface of the driven-side cam 37 in the width direction is formed at a front end portion and a rear end portion (two positions spaced in the front and rear direction) with a pair of guide convex parts 60a, 60b protruding inward in the width direction. A distance between side surfaces of the pair of guide convex parts 60a, 60b, which face each other in the front and rear direction, is slightly greater than a distance between a front surface and a rear surface of a rectangular frame-shaped convex part 61 formed on an outer surface of the other support plate part 22b in the width direction, which will be described later.

The driven-side cam 37 is externally fitted so as to be rotatable relative to the adjustment rod 17a and to be relatively displaceable in the width direction (the axial direction of the adjustment rod 17a) in a state where a part close to the other axial end of the adjustment rod 17a is inserted in the central hole 58.

One (front) guide convex part 60a of the pair of guide convex parts 60a, 60b is arranged at a front side of a front side frame part 62 configuring the rectangular frame-shaped convex part 61. The other (rear) guide convex part 60b of the pair of guide convex parts 60a, 60b is arranged at a rear side of a rear side frame part 63 configuring the rectangular frame-shaped convex part 61. In this state, a rear surface of the one guide convex part 60a and a front surface of the front side frame part 62 are made to closely face each other, and a front surface of the other guide convex part 60b and a rear surface of the rear side frame part 63 are made to closely face each other. By doing so, rotation of the driven-side cam 37 relative to the other support plate part 22b is locked. In the meantime, in a structure where the rectangular frame-shaped convex part 61 is not provided, the other support plate part 22b is provided with an engagement part that can lock the rotation of the driven-side cam 37 relative to the other support plate part 22b by engagement with the pair of guide convex parts 60a, 60b.

In the meantime, the drive-side cam 38 is made of sintered metal, for example, is formed with a central hole 59 for inserting therein the adjustment rod 17a, and has a circular ring plate shape or a rectangular plate shape as a whole. In the first example, an inner peripheral surface of the central hole 59 of the drive-side cam 38 is formed to have a shape capable of non-circular fitting with the outer peripheral surface of the non-circular part 33 of the adjustment rod 17a. Also, an inner surface (right surface, in FIG. 1) of the drive-side cam 38 in the width direction is formed with a drive-side cam surface, which is a circumferential concave-convex surface. Also, an outer surface of the drive-side cam 38 in the width direction is provided with a drive-side engaging convex part 40 protruding outward in the width direction. The drive-side cam 38 is mounted in a state where an outer peripheral surface (a portion of the non-circular part 33) of a part, which is located further toward the other axial end side than the part to which the driven-side cam 37 is externally fitted, of the part close to the other axial end of the adjustment rod 17a is fitted to the central hole 59 in a non-circular form. Also, in this state, the drive-side engaging convex part 40 is engaged to a lever-side through-hole 4 formed at a base end portion of the adjustment lever 23. In this way, the drive-side cam 38 is configured to rotate integrally with the adjustment lever 23.

In the meantime, the part close to the other axial end of the adjustment rod 17a is press-fitted in the central hole 59 of the drive-side cam 38, so that the drive-side cam 38 and the adjustment rod 17a can be integrally rotated.

By the above configuration, the adjustment lever 23, the drive-side cam 38 and the adjustment rod 17a are mounted to be integrally rotatable.

Also, the lock mechanism 39 includes a fixed-side tooth part 42, a moveable-side lock member 43, and the non-circular part 33 provided to the adjustment rod 17a. The lock mechanism 39 is to prevent the vertical displacement of the adjustment rod 17a by concave-convex engagement, in the locked state.

The fixed-side tooth part 42 corresponds to the fixed-side engagement part defined in the claims. The fixed-side tooth part 42 is configured by a concave-convex part formed on the outer surface in the width direction of the other support plate part 22b in a direction parallel with the formation direction (vertical direction) of the other long hole 15b for tilt adjustment (the description 'parallel with the formation direction of the long hole for tilt adjustment' includes a substantially parallel state as well inasmuch as the fixed-side tooth part 42 and a moveable-side tooth part 49 of the moveable-side lock member 43 are concave-convex-engaged in the locked state, so that the vertical holding force of the steering wheel 1 can be made as high as possible.). The same applies hereinafter). In the meantime, the fixed-side tooth part 42 may be directly formed on the other support plate part 22b or may be formed on other member (for example, a plate-shaped member and the like) fixed (for example, welded) to the other support plate part 22b.

Specifically, in the first example, a part, which is adjacent to the other long hole 15b for tilt adjustment in the front and rear direction and the vertical direction, of the outer surface of the other support plate part 22b in the width direction is formed with a concave part 44. In the first example, the concave part 44 has a substantially rectangular shape, which is long in the vertical direction, as seen in the width direction. However, the present invention is not limited to the shape. A front surface and a rear surface of the concave part 44 are parallel with the formation direction of the other long hole 15b for tilt adjustment. The front surface of the concave part 44 is formed with the fixed-side tooth part 42.

In the meantime, in the first example, a part, which surrounds the other long hole 15b for tilt adjustment, of the outer surface of the other support plate part 22b in the width direction is subjected to press working on the inner surface of the other support plate part 22b in the width direction, so that the rectangular frame-shaped convex part 61, as seen in the width direction, is formed. Apart surrounded by the rectangular frame-shaped convex part is configured as the concave part 44. In the meantime, the concave part 44 may also be formed by further recessing the part, which surrounds the other long hole 15b for tilt adjustment, of the outer surface of the other support plate part 22b in the width direction than the other part.

In the meantime, the fixed-side tooth part 42 may be formed on the rear surface of the concave part 44, other than the front surface thereof. Also, although not shown, as another aspect of forming the fixed-side tooth part 42, parts, which are located more forward and rearward than the other long hole 15b for tilt adjustment, of the outer surface of the other support plate part 22b in the width direction may be formed with a pair of vertical convex parts parallel with the formation direction of the other long hole 15b for tilt adjustment and protruding outward in the width direction, and a rear surface of one (front) vertical convex part of the pair of vertical convex parts (or a front surface of the other vertical convex part) may be formed with the fixed-side tooth part 42. Alternatively, both end portions in the front and rear direction of a plate-shaped member separately provided from the other support plate part 22b may be formed with a pair of vertical convex parts, and a rear surface of one vertical convex part of the pair of vertical convex parts (or a front surface of the other vertical convex part) may be formed with the fixed-side tooth part 42. When this configuration is adopted, the plate-shaped member is fixed to the other support plate part 22b by welding.

The moveable-side lock member 43 is made by punch pressing a metal plate having elasticity, and has a main body part 45, a wedge part 46, a pair of support parts 47a, 47b, and a pair of arm parts 48a, 48b corresponding to the pair of elastic arm parts defined in the claims. A structure of the moveable-side lock member 43 is described with reference to a mounted state shown in FIG. 2. In the meantime, FIG. 2A depicts a state (unlocked state) where a position of the steering wheel 1 can be adjusted, and FIG. 2B depicts a state (locked state) where the vertical position and the position in the front and rear direction of the steering wheel 1 can be kept at positions after adjustment.

The main body part 45 is substantially cylindrical. Specifically, an outer edge (outer periphery) of the main body part 45 is configured by a part shown with a solid line α₁ in FIG. 2 and a part shown with a dashed-two dotted line β₁. In the meantime, an inner edge (inner periphery) of the main body part 45 is configured by a part shown with solid lines α₂ and α₃ in FIG. 2 and dashed-two dotted lines β₂ and β₃.

The wedge part 46 has a substantially triangular shape, as seen in the width direction, and continues to a circumferential part (which is an upper end portion in the unlocked state and is shown with the dashed-two dotted line β₁ in FIG. 2) of an outer peripheral surface of the main body part 45. A front end face (left end face in FIG. 2) of the wedge part 46 is provided with the moveable-side tooth part 49 configured by a plurality of concave portions and convex portions alternately arranged. The wedge part 46 has such a shape that a thickness in the front and rear direction increases toward the upper (as it is more distant from the adjustment rod 17a in the vertical direction) in the locked state. In the meantime, the moveable-side tooth part 49 corresponds to the moveable-side engagement part defined in the claims.

The pair of support parts 47a, 47b is provided to protrude radially inward at two positions in the vertical direction in the unlocked state on an inner peripheral surface of the main body part 45. Portions, which are to contact the non-circular part 33 in the mounted state, of inner peripheral surfaces of the pair of support parts 47a, 47b are inclined radially outward toward one circumferential side (a clockwise direction in FIG. 2).

The pair of arm parts 48a, 48b is provided to protrude to be substantially parallel with each other in the vertical direction in the unlocked state from two positions, which are opposite to each other in the radial direction, on the inner peripheral surface of the main body part 45. Specifically, one (upper) arm part 48a of the pair of arm parts 48a, 48b is provided to extend downward from a portion, which is adjacent to one circumferential side (clockwise direction, in FIG. 2) of the upper support part 47a in the unlocked state, on the inner peripheral surface of the main body part 45. On the other hand, the other (lower) arm part 48b of the pair of arm parts 48a, 48b is provided to extend upward from a portion, which is adjacent to one circumferential side of the lower support part 47a in the unlocked state, on the inner peripheral surface of the main body part 45.

In the first example, a thickness dimension of the moveable-side lock member 43 is smaller than a depth dimension (dimension in the width direction) of the concave part 44.

Also, in the locked state, a part (a part shown with diagonal lattices in FIG. 2B), which aligns with the wedge part 46 (the part at which the moveable-side tooth part 49 is formed) in the vertical direction and is located between the moveable-side tooth part 49 and a tangential line γ of a contact part between one support part 47a and one pressing curved surface part 36a of the non-circular part 33, is configured as a wedge-shaped part 55 (having a wedge shape) of which a thickness dimension in the front and rear direction increases toward the upper (as it is more distant from the central axis of the adjustment rod 17a in the vertical direction).

The moveable-side lock member 43 configured as described above is arranged at an inner side of the concave part 44 of the other support plate part 22a in a state where the non-circular part 33 of the adjustment rod 17a is inserted in the support hole 50 having a substantially rectangular shape defined by the pair of support parts 47a, 47b and the pair of arm parts 48a, 48b. In this state, a radially inner end face of one (upper) support part 47a of the pair of support parts 47a, 47b is in contact with one (upper) pressing curved surface part 36a of the pair of pressing curved surface parts 36a, 36b of the non-circular part 33, and a radially inner end face of the other (lower) support part 47b is in contact with the other (lower) pressing curved surface part 36a of the pair of pressing curved surface parts 36a, 36b.

Also, a rear surface of the leading end portion of one (front) arm part 48a of the pair of arm parts 48a, 48b is in elastic contact with one (front) flat surface part 35a of the pair of flat surface parts 35a, 35b of the non-circular part 33, and a front surface of the leading end portion of the other (rear) arm part 48b is in elastic contact with the other (front) flat surface part 35a of the pair of flat surface parts 35a, 35b. Thereby, the pair of arm parts 48a, 48b is configured to elastically move toward and away from the pair of flat surface parts 35a, 35b. In this way, the moveable-side lock member 43 is supported to the adjustment rod 17a so as to be synchronously displaceable in the vertical direction and in the rotation direction. In the meantime, in the mounted state, the moveable-side lock member 43 can elastically rotate relative to the adjustment rod 17a within the elastic range of the pair of arm parts 48a, 48b.

Also, the moveable-side lock member 43 is arranged with being clamped between the outer surface (a bottom surface of the concave part 44) of the other support plate part 22b in the width direction and the inner surface of the driven-side cam 37 in the width direction. In this way, the moveable-side lock member 43 is positionally determined (retained) in the width direction. The thickness of the moveable-side lock member 43 is smaller than the depth of the concave part 44. For this reason, it is possible to form a slight gap in the width direction between the outer surface of the moveable-side lock member 43 in the width direction and the inner surface of the driven-side cam 37 in the width direction and/or between the inner surface of the moveable-side lock member 43 in the width direction and the outer surface (the bottom surface of the concave part 44) of the other support plate part 22b in the width direction. As a result, the moveable-side lock member 43 is not strongly clamped by the outer surface (the bottom surface of the concave part 44) of the other support plate part 22b in the width direction and the inner surface of the driven-side cam 37 in the width direction.

Subsequently, an operation of the position adjustment device for steering wheel of the first example is described.

When setting the steering wheel 1 to the state (locked state) where the vertical position and the position in the front and rear direction of the steering wheel 1 can be kept at positions after adjustment, the adjustment lever 23 in the state (unlocked state) where the position of the steering wheel 1 can be adjusted is caused to oscillate in a predetermine direction (in general, upward; hereinafter, referred to as 'locking direction'). Thereby, an axial dimension of the cam device is expanded to contract an interval between the driven-side cam 37 and the pressing plate 25. As a result, a frictional force that is applied to a contact part between the outer peripheral surface of the inner column 19a and the inner peripheral surface of the outer column 18a, a frictional force that is applied to a contact part between the outer surfaces in the width direction of the pair of clamped parts 21a, 21a configuring the displacement bracket 13a and the inner surfaces in the width direction of the pair of support plate parts 22a, 22b configuring the support bracket 14a, and a frictional force that is applied between a contact part between the outer surfaces of the pair of support plate parts 22a, 22b in the width direction and the inner surfaces of the driven-side cam 37 and the pressing plate 25 in the width direction are respectively increased, and the locked state is formed.

Subsequently, an operation of the lock mechanism 39 is described.

Upon the above operation, when the adjustment rod 17a is rotated in association with the oscillation of the adjustment lever 23, the moveable-side lock member 43 is rotated in the locking direction shown in FIG. 2B from the state shown in FIG. 2A, together with the adjustment rod 17a. Then, a portion of the fixed-side tooth part 42 and a portion of the moveable-side tooth part 49 are engaged (concave-convex engagement). In other words, each convex portion configuring the fixed-side tooth part 42 and each convex portion configuring the moveable-side tooth part 49 are superimposed on each other in the vertical direction.

Specifically, in the first example, the moveable-side tooth part 49 is gradually engaged with the fixed-side tooth part 42 in order from the convex portion formed at the other end portion (an end portion of a counterclockwise direction-side in FIG. 2) in the circumferential direction of the moveable-side tooth part 49, in association with the above rotation. At an initial stage of the engagement, the leading end portion of the convex portion of the moveable-side tooth part 49 and the leading end portion of the convex portion of the fixed-side tooth part 42 may be in contact with each other and may not be normally engaged with each other. However, in the first example, since the convex portion of the moveable-side tooth part 49 is moved relative to the convex portion of the fixed-side tooth part 42, in association with the rotation of the moveable-side tooth part 49, the moveable-side tooth part 49 and the fixed-side tooth part 42 can be caused to normally engage with each other.

Also, in the first example, the moveable-side lock member 43 is supported to the adjustment rod 17a to be elastically rotatable within the elastic range of the pair of arm parts 48a, 48b. For this reason, even when the leading end portion of the convex portion of the moveable-side tooth part 49 and the leading end portion of the convex portion of the fixed-side tooth part 42 are contacted to each other and are thus not normally engaged with each other, the moveable-side lock member 43 is elastically displaced from this state, so that the moveable-side tooth part 49 and the fixed-side tooth part 42 can be normally engaged with each other.

Also, as described above, in the state where the moveable-side tooth part 49 and the fixed-side tooth part 42 are engaged with each other, the moveable-side lock member 43 is applied with a rotating force in the locking direction on the basis of the elastic force of the pair of arm parts 48a, 48b and a wedge effect is generated between the fixed-side tooth part 42 and one pressing curved surface part 36a and the wedge-shaped part 55, so that the moveable-side tooth part 49 is strongly pressed to the fixed-side tooth part 42.

In the meantime, in the locked state, a part, which is in contact with one pressing curved surface part 36a of the non-circular part 33, of the inner peripheral surface of one (upper) support part 47a is inclined upward toward one circumferential side (a front side in the clockwise direction in FIG. 2B). On the other hand, a part, which is in contact with one pressing curved surface part 36b of the non-circular part 33, of the inner peripheral surface of the other (lower) support part 47b is inclined downward toward one circumferential side.

When switching from the locked state to the unlocked state, the adjustment lever 23 is caused to oscillate in an opposite direction (generally, downward) to the predetermined direction, so that the axial dimension of the cam device is contracted to expand the interval between the driven-side cam 37 and the pressing plate 25. Thereby, each frictional force is reduced. Also, the moveable-side lock member 43 is rotated in the unlocking direction as shown in FIG. 2A from the state shown in FIG. 2B, together with the adjustment rod 17a, in association with the oscillation of the adjustment lever 23. Then, the engagement (concave-convex engagement) between the fixed-side tooth part 42 and the moveable-side tooth part 49 is released. In this state, the adjustment rod 17a is in the state where the position of the steering wheel 1 can be adjusted within the range in which the adjustment rod 17a can be displaced in the pair of long holes 15a, 15b for tilt adjustment and the pair of long holes 16a, 16b for telescopic adjustment.

According to the first example configured as described above, it is possible to firmly keep the vertical position of the steering wheel in the state (locked state) where the steering wheel can be kept at the position after the adjustment.

That is, in the first example, in the locked state, the fixed-side tooth part 42 provided to the other support plate part 22b of the support bracket 14a fixed to the vehicle body and the moveable-side tooth part 49 of the moveable-side lock member 43 are engaged with each other. The moveable-side lock member 43 is supported to the adjustment rod 17a so as to be synchronously displaceable in the vertical direction. For this reason, for example, even when the steering wheel 1 is applied with the upward high impact force upon a secondary collision, it is possible to prevent the steering wheel 1 from being displaced (for example, leaping up) in the vertical direction by the high keeping force based on the engagement between the fixed-side tooth part 42 and the moveable-side tooth part 49. As a result, it is possible to keep a position of an airbag inflated at the rear of the steering wheel 1 at an appropriate position, and to securely protect a driver by the airbag. Also, for example, if a downward impact load is applied to the steering wheel 1 in association with leaning against the steering wheel 1 when the driver gets in or off the vehicle, it is possible to prevent the steering wheel 1 from being displaced downward.

Also, in the first example, in the locked state, the slight gap is provided in the width direction between the outer surface of the moveable-side lock member 43 in the width direction and the inner surface of the driven-side cam 37 in the width direction or between the inner surface of the moveable-side lock member 43 in the width direction and the outer surface of the other support plate part 22b in the width direction. For this reason, the high frictional force is not generated between both side surfaces of the moveable-side lock member 43 in the width direction and the inner surface of the driven-side cam 37 in the width direction and the outer surface of the other support plate part 22b in the width direction. As a result, when switching from the locked state to the unlocked state, it is possible to prevent a situation where the moveable-side lock member 43 is difficult to rotate and the operability of the adjustment lever 23 is lowered.

Also, in the first example, in the locked state, the part, which is in contact with one pressing curved surface part 36a of the non-circular part 33, of the inner peripheral surface of one (upper) support part 47a is inclined upward toward one circumferential side (a front side in the clockwise direction in FIG. 2). For this reason, when the adjustment rod 17a (the steering wheel 1) is intended to be displaced upward in the locked state, the rotating force in the locking direction is applied to the moveable-side lock member 43, based on the force by which the one pressing curved surface part 36a presses upward the one (upper) support part 47a. As a result, the moveable-side lock member 43 is pressed to the fixed-side tooth part 42, so that the adjustment rod 17a (the steering wheel 1) can be prevented from being displaced upward.

Also, in the first example, a part of the moveable-side lock member 43 is provided with the wedge part 46 as described above, so that the part (the part shown with the diagonal lines in FIG. 2B), which aligns with the wedge part 46 in the vertical direction in the locked state, is configured as the wedge-shaped part 55 of which a thickness dimension in the front and rear direction increases toward the upper. For this reason, when the adjustment rod 17a (the steering wheel 1) is intended to be displaced upward upon occurrence of the secondary collision, the wedge effect is generated between the fixed-side tooth part 42 and one pressing curved surface part 36a and the wedge-shaped part 55, thereby resisting the upward displacement of the adjustment rod 17a (the steering wheel 1).

In the meantime, when implementing the structure of the first example, the lock mechanism 39 may be provided to only the other (right, in FIG. 1) support plate part 22b of the pair of support plate parts 22a, 22b or both the pair of support plate parts 22a, 22b. When adopting this configuration, as a structure of the lock mechanism provided to the other support plate part 22b, a symmetric structure with respect to the lock mechanism 39 in the width direction may be adopted.

### [Second Example of Embodiment]

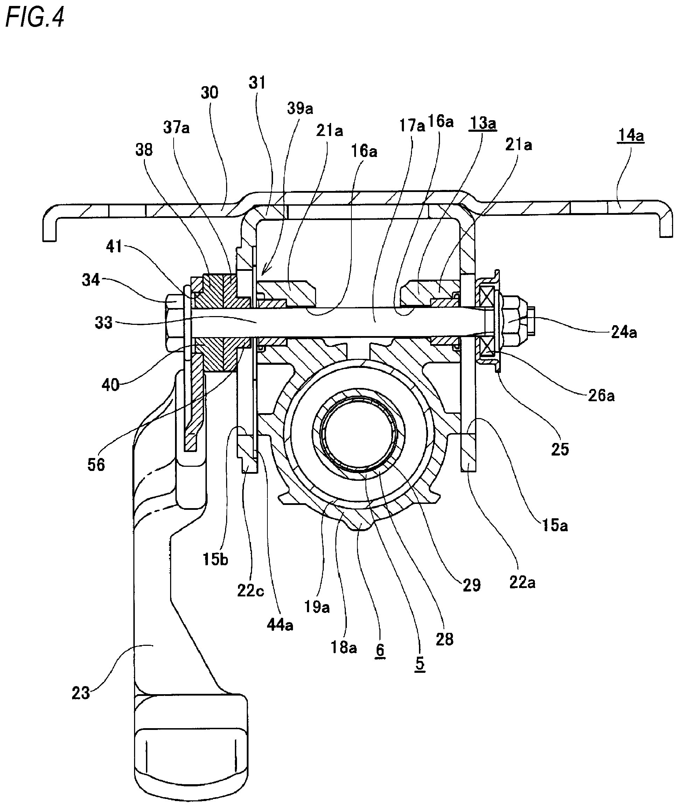

A second example of the embodiment of the present invention is described with reference to FIG. 4. In the second example, a lock mechanism 39a configuring the position adjustment device for steering wheel is provided at an inner side in the width direction of the other support plate part 22c of a pair of support plate parts 22a, 22c configuring the support bracket 14a.

Specifically, in the second example, a part, which is adjacent to the other long hole 15b for tilt adjustment in the front and rear direction and in the vertical direction, of an inner surface of the other support plate part 22c in the width direction is formed with a concave part 44a having a substantially rectangular shape, which is long in the vertical direction, as seen in the width direction. A front surface edge (or rear edge) of the concave part 44a is formed with the fixed-side tooth part 42 (refer to FIG. 2).

A structure of the moveable-side lock member 43 (a detailed structure is shown in FIG. 2) configuring the lock mechanism 39a is similar to the first example of the embodiment. The moveable-side lock member 43 is arranged at the inner side of the concave part 44a in a state where the non-circular part 33 of the adjustment rod 17a is inserted in the support hole 50 defined by the pair of support parts 47a, 47b and the pair of arm parts 48a, 48b.

In this state, the moveable-side lock member 43 is arranged with being clamped between the inner surface (the bottom surface of the concave part 44a) of the other support plate part 22c in the width direction and the outer surface in the width direction of the other clamped part 21a of the pair of clamped parts 21a, 21a. In this way, the moveable-side lock member 43 is positionally determined (retained) in the width direction.

In the meantime, also in the second example, since the thickness of the moveable-side lock member 43 is made smaller than the depth of the concave part 44a, it is possible to form a slight gap in the width direction between the outer surface of the moveable-side lock member 43 in the width direction and the inner surface (the bottom surface of the concave part 44a) of the other support plate part 22b in the width direction or between the inner surface of the moveable-side lock member 43 in the width direction and the outer surface of the other clamped part 21a in the width direction. As a result, the moveable-side lock member 43 is not clamped by the inner surface (the bottom surface of the concave part 44) of the other support plate part 22c in the width direction and the outer surface of one clamped part 21a in the width direction.

In the meantime, in the second example, a guide protrusion 56 arranged at the inner side of the other long hole 15b for tilt adjustment and configured to lock rotation and to guide vertical displacement of the driven-side cam 37a is formed at a radially inner end portion of the inner surface of the driven-side cam 37a in the width direction.

The other structures and operations/effects are similar to the first example of the embodiment.

### [Third Example of Embodiment]

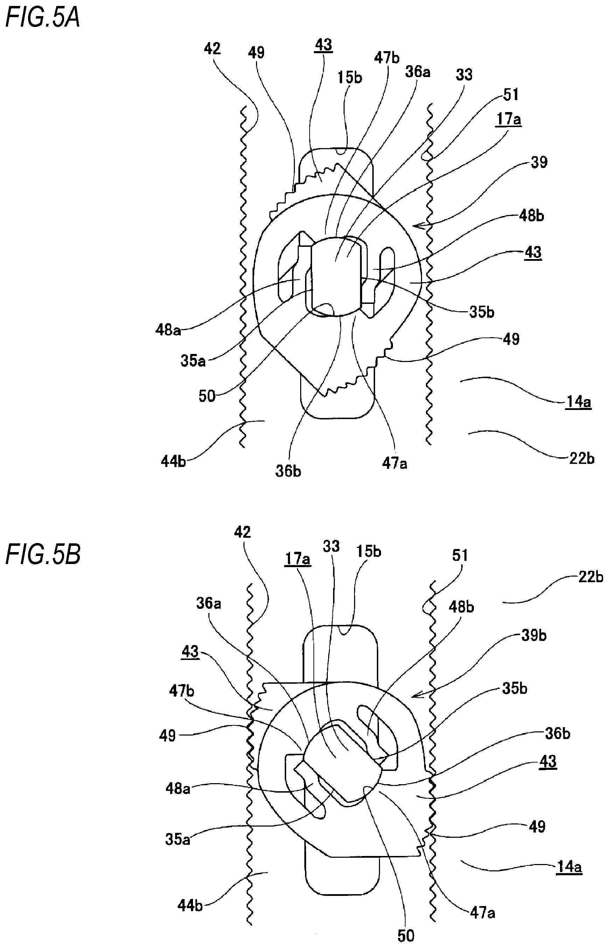

A third example of the embodiment of the present invention is described with reference to FIG. 5. In a lock mechanism 39b configuring the position adjustment device for steering wheel of the third example, a part, which is adjacent to the other long hole 15b for tilt adjustment in the front and rear direction and in the vertical direction, of the outer surface in the width direction of the other support plate part 22b configuring the support bracket 14a is formed with a concave part 44b. The concave part 44b has a substantially rectangular shape, which is long in the vertical direction, as seen in the width direction, and a front surface and a rear surface thereof are formed in parallel with the formation direction of the other long hole 15b for tilt adjustment. The front surface of the concave part 44b is formed with the fixed-side tooth part 42, and the rear surface of the concave part 44b is formed with a second fixed-side tooth part 51. In the third example, the fixed-side tooth part 42 and the second fixed-side tooth part 51 correspond to the fixed-side engagement part defined in the claims.

Also, in the third example, the lock mechanism 39b has a pair of moveable-side lock members 43, 43. In the third example, the pair of moveable-side lock members 43, 43 has the same shape. Specifically, one (an inner side in the width direction, a rear side in FIG. 5) moveable-side lock member 43 of the pair of moveable-side lock members 43, 43 is arranged in the similar aspect (so that the moveable-side tooth part 49 is engaged with the fixed-side tooth part 42 formed on the front surface of the concave part 44b, in the locked state) to the first example and the second example of the embodiment. In the meantime, the other (an outer side in the width direction, a front side in FIG. 5) moveable-side lock member 43 of the pair of moveable-side lock members 43, 43 is arranged with being rotated by 180° relative to the one moveable-side lock member 43 (so that the moveable-side tooth part 49 is engaged with the second fixed-side tooth part 51 formed on the rear surface of the concave part 44b, in the locked state).

The pair of moveable-side lock members 43, 43 configured as described above is respectively arranged at the inner side of the concave part 44b of the other support plate part 22a in the state where the non-circular part 33 of the adjustment rod 17a is inserted in the support hole 50 defined by the pair of support parts 47a, 47b and the pair of arm parts 48a, 48b. In this way, the pair of moveable-side lock members 43, 43 is supported to the adjustment rod 17a to be synchronously displaceable in the vertical direction and in the rotation direction.

In the meantime, in the third example, a thickness sum of the pair of moveable-side lock members 43, 43 is made smaller than the depth of the concave part 44b (a dimension in the width direction). For this reason, also in the locked state, it is possible to form a slight gap in the width direction between the outer surface of the other moveable-side lock member 43 in the width direction and the inner surface of the driven-side cam 37 in the width direction, between the inner surface of the other moveable-side lock member 43 in the width direction and the outer surface of one moveable-side lock member 43 in the width direction or between the inner surface of one moveable-side lock member 43 in the width direction and the outer surface (the bottom surface of the concave part 44b) of the other support plate part 22b in the width direction. As a result, the pair of moveable-side lock members 43, 43 is not strongly clamped by the outer surface (the bottom surface of the concave part 44b) of the other support plate part 22b in the width direction and the inner surface of the driven-side cam 37 in the width direction.

In the third example configured as described above, when the adjustment rod 17a is rotated in the locking direction (the counterclockwise direction, in FIG. 5) in association with the oscillation of the adjustment lever 23 upon the switching from the unlocked state to the locked state, the pair of moveable-side lock members 43, 43 is rotated from a state shown in FIG. 5A to a state shown in FIG. 5B, together with the adjustment rod 17a. Then, a portion of the fixed-side tooth part 42 and a portion of the moveable-side tooth part 49 of one moveable-side lock member 43 are engaged (concave-convex engagement), and a portion of the second fixed-side tooth part 51 and a portion of the moveable-side tooth part 49 of the other moveable-side lock member 43 are also engaged (concave-convex engagement).

According to the structure of the third example, it is possible to further firmly fix the vertical position of the steering wheel 1 in the locked state, based on the engagement between the fixed-side tooth part 42 and the moveable-side tooth part 49 of one moveable-side lock member 43 and the engagement between the second fixed-side tooth part 51 and the moveable-side tooth part 49 of the other moveable-side lock member 43, as compared to the structure of the first example of the embodiment.

Also, in the third example, when the adjustment rod 17a (the steering wheel 1) is intended to be displaced upward in association with the occurrence of the secondary collision, the wedge effect is generated between the fixed-side tooth part 42 and one pressing curved surface part 36a of the non-circular part 33 and the wedge-shaped part 55 of one moveable-side lock member 43, thereby resisting the upward displacement of the adjustment rod 17a (the steering wheel 1).

Also, in the third example, if a downward impact load is applied to the steering wheel 1 in association with leaning against the steering wheel 1 when the driver gets in or off the vehicle, even though the adjustment rod 17a (the steering wheel 1) is intended to be displaced downward, the wedge effect is generated between the second fixed-side tooth part 51 and the other pressing curved surface part 36b of the non-circular part 33 and the wedge-shaped part 55 of the other moveable-side lock member 43, thereby resisting the downward displacement of the adjustment rod 17a (the steering wheel 1).

The other structures and operations/effects are similar to the first example of the embodiment.

### [Fourth Example of Embodiment]

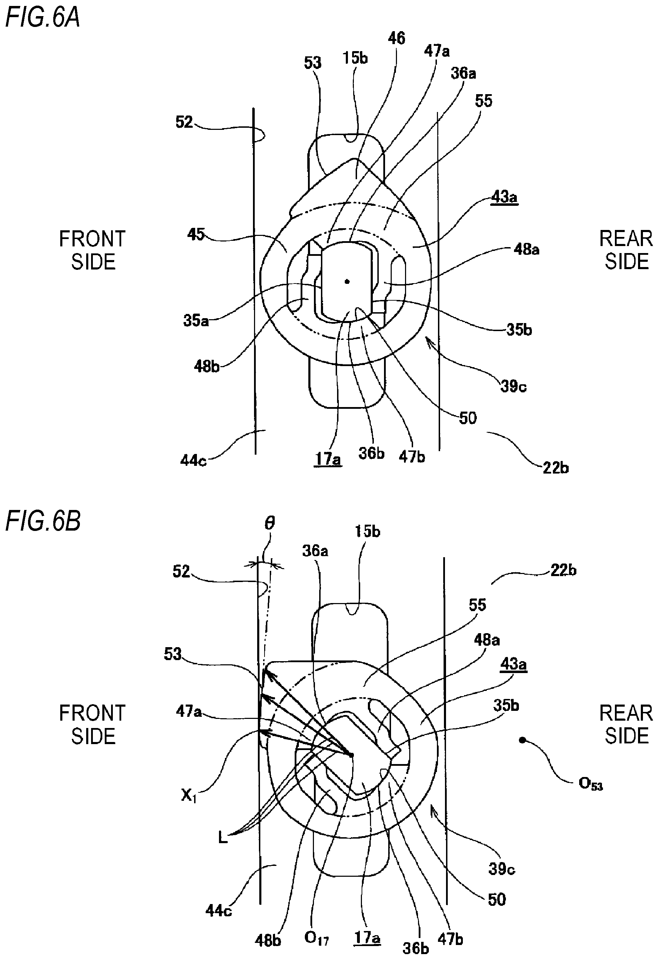

A fourth example of the embodiment of the present invention is described with reference to FIG. 6.

In a lock mechanism 39c configuring the position adjustment device for steering wheel of the fourth example, a front surface of a concave part 44c formed on the outer surface of the other support plate part 22b in the width direction is not formed with the fixed-side tooth part 42 of the first example of the embodiment, and is instead formed with a fixed-side friction surface 52 parallel with the formation direction (vertical direction) of the other long hole 15b for tilt adjustment. In the fourth example, the fixed-side friction surface 52 corresponds to the fixed-side engagement part defined in the claims. In the meantime, the fixed-side friction surface 52 is formed to be flat and may also be subjected to a surface treatment for increasing a friction coefficient of a surface. As the surface treatment, for example, roughening processing (shot blasting, knurling processing and the like) may be performed to increase a surface roughness of the fixed-side friction surface 52 or the fixed-side friction surface 52 may be coated with a friction agent. The friction agent is not particularly limited inasmuch as it can increase the friction coefficient of the fixed-side friction surface 52.

Also, the moveable-side lock member 43a is provided with a moveable-side friction surface 53, instead of the moveable-side tooth part 49 of the moveable-side lock member 43 of the first example of the embodiment. In the fourth example, the moveable-side friction surface 53 corresponds to the moveable-side engagement part defined in the claims.

Specifically, in the fourth example, the moveable-side friction surface 53 is formed to have a curved surface shape of which a center is a center O₅₃ located at the rear (a right side, in FIG. 6) of a central axis O₁₇ₐ of the adjustment rod 17a and deviating slightly upward from the central axis O₁₇ₐ, in the locked state. Also, the moveable-side friction surface 53 is configured so that a distance L from the central axis O₁₇ₐ of the adjustment rod 17a increases from a position X₁, at which the moveable-side friction surface 53 is friction-engaged with the fixed-side friction surface 52, toward one circumferential side (a front side in the clockwise direction in FIG. 6) of the moveable-side lock member 43a, in the locked state shown in FIG. 6B. In this way, a friction angle θ is provided to the friction engagement part (the position X₁) between the fixed-side friction surface 52 and the moveable-side friction surface 53.

In the meantime, the moveable-side friction surface 53 may also be configured by a smooth curved surface or may be subjected to a surface treatment for increasing a friction coefficient of the surface. As the surface treatment, the similar treatment to the fixed-side friction surface 52 may be adopted.

In the fourth example, both the member (in the fourth example, the other support plate part 22b) having the fixed-side friction surface 52 and the member (in the fourth example, the moveable-side lock member 43a) having the moveable-side friction surface 53 are made of iron-based alloy such as carbon steel.

Also in the fourth example, when the adjustment rod 17a is rotated in association with the oscillation of the adjustment lever 23, the moveable-side lock member 43a is rotated from the state shown in FIG. 6A to the state shown in FIG. 6B, together with the adjustment rod 17a. Then, a portion of the fixed-side friction surface 52 and a portion of the moveable-side friction surface 53 are friction-engaged. In other words, the fixed-side friction surface 52 and the moveable-side friction surface 53 are friction-engaged in a state where a direction of the frictional force faces toward a direction parallel (substantially parallel) with the formation direction (vertical direction) of the other long hole 15b for tilt adjustment.

In the meantime, the member (the support bracket 14a) having the fixed-side friction surface 52 may be made of a metal material having hardness lower than the metal material of the member (the moveable-side lock member 43a) having the moveable-side friction surface 53. For example, the other support plate part 22b is made of aluminum alloy, and the moveable-side lock member 43a is made of iron-based alloy such as carbon steel. When this configuration is adopted, it is possible to cause the moveable-side friction surface 53 to bite the fixed-side friction surface 52, in the locked state.

Also, when the fixed-side friction surface 52 is formed on other member (for example, a plate-shaped member or the like), which is a separate member from the other support plate part 22b and is fixed (for example, welded) to the other support plate part 22b, the other support plate part 22b may be made of iron-based alloy such as carbon steel, and only the other member may be made of aluminum alloy. When this configuration is adopted, it is possible to achieve the above-described effects while securing the stiffness of the support bracket 14a.

Also, the moveable-side tooth part 49 of the first example of the embodiment may be formed, instead of the moveable-side friction surface 53. When this configuration is adopted, it is possible to easily cause the moveable-side tooth part 49 to bite the fixed-side friction surface 52.

Also, a structure where the pair of moveable-side lock members is combined with phases thereof being offset by 180° may be adopted, like the third example of the embodiment. In this case, the fixed-side friction surface is provided on both the front and rear surfaces of the concave part 44c.

The structure of the fourth example can be appropriately applied to the structure of each example of the embodiment.

The other structures and operations/effects are similar to the first example of the embodiment.

### [Fifth Example of Embodiment]

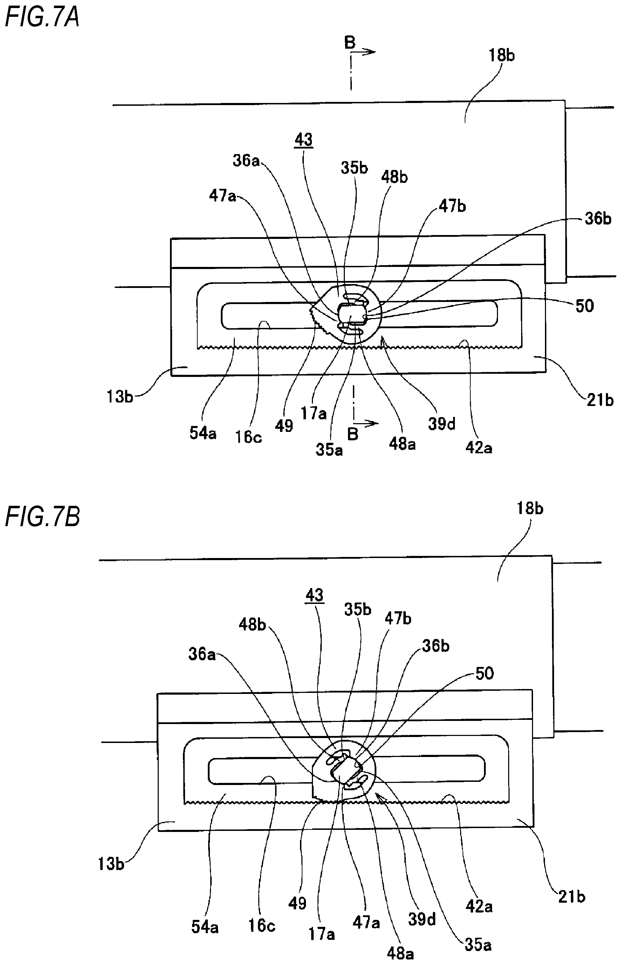

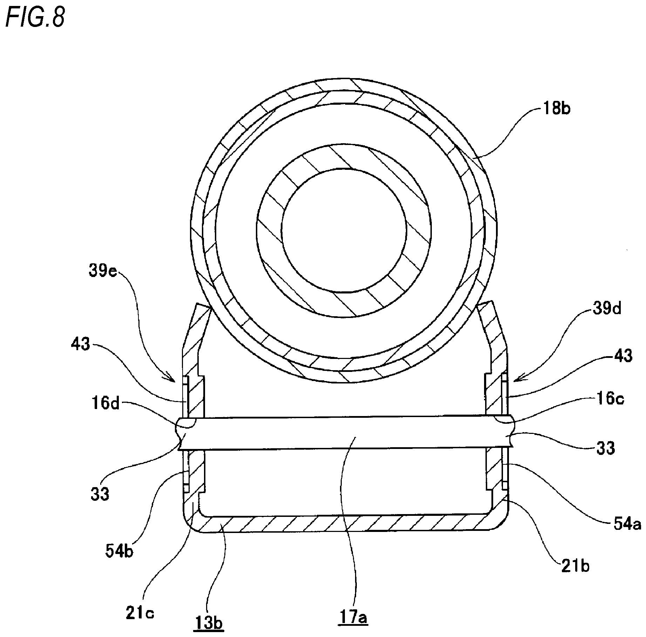

A fifth example of the embodiment of the present invention is described with reference to FIGS. 7 and 8.

In the fifth example, a structure of the position adjustment device for steering wheel having a lock mechanism for increasing the force of keeping the position in the front and rear direction of the steering wheel 1 in the locked state is provided.

Specifically, in the fifth example, a displacement bracket 13b having a substantially U-shaped section and formed by bending a metal plate having sufficient stiffness is fixed to the front end portion of the outer column 18b clamped between the pair of support plate parts 22a, 22b of the support bracket 14a (refer to FIG. 11) by welding or the like.

Also, a pair of clamped parts 21b, 21c configuring the displacement bracket 13b is formed with through-holes 16c, 16d for telescopic adjustment extending in the axial direction (the front and rear direction), respectively. In the fifth example, each of the through-holes 16c, 16d for telescopic adjustment corresponds to the long hole for adjustment defined in the claims, and the front and rear direction corresponds to the position adjustment direction.

Also, portions, which are adjacent to the through-hole 16d for telescopic adjustment in the front and rear direction and in the vertical direction, of outer surfaces of the pair of clamped parts 21b, 21c in the width direction are formed with concave parts 54a, 54b that are long in the front and rear direction.

Also, in the fifth example, the pair of clamped parts 21b, 21c is provided with lock mechanisms 39d, 39e, respectively.

In the below, the lock mechanism 39d provided to one (right) clamped part 21b of the pair of clamped parts 21b, 21c is described. In the fifth example, since a structure of the lock mechanism 39e provided to the other clamped part 21c of the pair of clamped parts 21b, 21c is similar to the lock mechanism 39d provided to one clamped part 21b, the description thereof is omitted.

The lock mechanism 39d is configured by a fixed-side tooth part 42a, the moveable-side lock member 43, and the non-circular part 33 provided to the adjustment rod 17a.

The fixed-side tooth part 42a is provided on an outer surface of one clamped part 21b in the width direction, and is configured by a concave-convex part formed in the formation direction (vertical direction) of the through-hole 16d for telescopic adjustment.

Specifically, in the fifth example, a lower surface of the concave part 54a formed on one (right) clamped part 21b is formed with the fixed-side tooth part 42a. In the meantime, although not shown, an upper surface of a lower frame part configuring a frame member having a rectangular frame shape, which is provided separately from one clamped part 21b and is long in the front and rear direction, may be formed with the fixed-side tooth part 42a, and the frame member may be fixed to an inner side of the concave part 54a.

The moveable-side lock member 43 has a similar structure to the moveable-side lock member 43 of the first example of the embodiment, in which the moveable-side lock member 43 is arranged with being rotated rearward by about 90° (so that the moveable-side lock member 43 is engaged with the fixed-side tooth part 42a formed on the lower surface of the concave part 54a, in the locked state) with respect to the arrangement aspect of the first example of the embodiment. Since the other structure of the moveable-side lock member 43 is similar to the first example of the embodiment, the detailed description thereof is omitted.

The moveable-side lock member 43 is arranged at the inner side of the concave part 54a of the other support plate part 22a in the state where the non-circular part 33 of the adjustment rod 17a is inserted in the support hole 50 defined by the pair of support parts 47a, 47b and the pair of arm parts 48a, 48b. In the meantime, in the fifth example, a part, which is arranged at the inner side of the moveable-side lock member 43 of one lock mechanism 39d, of the adjustment rod 17a and a part, which is arranged at the inner side of the moveable-side lock member 43 of the other lock mechanism 39e, are provided with the non-circular parts 33, 33. The non-circular parts 33 may be formed to be continuous or to be spaced from each other in the axial direction of the adjustment rod 17a.

In the fifth example configured as described above, when the adjustment rod 17a is rotated in association with the oscillation of the adjustment lever 23 upon the switching from the unlocked state to the locked state, the moveable-side lock member 43 is rotated from a state shown in FIG. 7A to a state shown in FIG. 7B, together with the adjustment rod 17a. Then, the fixed-side tooth part 42a and the moveable-side tooth part 49 of the moveable-side lock member 43 are engaged (concave-convex engagement). In other words, each convex portion configuring the fixed-side tooth part 42a and each convex portion configuring the moveable-side tooth part 49 are superimposed on each other in the front and rear direction.

In the fifth example configured as described above, it is possible to firmly fix the position in the front and rear direction of the steering wheel 1 in the locked state by the concave-convex engagement between the fixed-side tooth part 42a and the moveable-side tooth part 49. As a result, in the locked state, when the high impact force is applied to the steering wheel 1 in the front and rear direction, it is possible to firmly keep the position of the steering wheel 1.

In the meantime, the structure where the pair of moveable-side lock members is offset by 180°, like the third example of the embodiment, or the structure where the fixed-side and moveable-side friction surfaces are friction-engaged, like the fourth example of the embodiment, may be applied to the structure of the fifth example. Also, a structure where only one clamped part 21b (21c) of the pair of clamped parts 21b, 21c is provided with the lock mechanism (a structure where any one of the lock mechanisms 39d, 39e is omitted) may be adopted. Also, a structure where the lock mechanisms 39d, 39e of the fifth example are provided at the inner sides of the pair of clamped parts 21b, 21c in the width direction may be adopted.

The other structures and operations/effects are similar to the first example of the embodiment.

### Industrial Applicability

The structures of the respective examples of the embodiment can be appropriately combined and implemented within a range in which the technical inconsistency is not caused. When applying the structures of the first example to the fourth example of the embodiment to the structure of the lock mechanism for increasing the force of keeping the position in the front and rear direction of the steering wheel, like the fifth example of the embodiment, the descriptions of the respective directions (the front and rear direction and the vertical direction) are appropriately changed and interpreted.

Also, the present invention can be applied to not only a structure where both the tilt mechanism for adjusting the vertical position of the steering wheel and the telescopic mechanism for adjusting the position in the front and rear direction are provided but also a structure where only the tilt mechanism or only the telescopic mechanism is provided.

Also, the displacement bracket may be provided below the outer column or above the outer column.

Also, the expansion/contraction mechanism can adopt not only the cam device but also a screw-type structure configured to adjust a tightening amount of the adjustment nut screwed to the male screw part provided on the adjustment rod, based on the oscillation of the adjustment lever.

The subject application is based on Japanese Patent Application No. 2016-078330 filed on April 8, 2016, the contents of which are incorporated hereby by reference.

### Description of Reference Numerals

1: steering wheel
2: steering gear unit
3: input shaft
4: tie-rod
5: steering shaft
6, 6a: steering column
7: universal joint
8: intermediate shaft
9: universal joint
10: housing
11: vehicle body
12: tilt shaft
13, 13a, 13b: displacement bracket
14, 14a: support bracket
15, 15a, 15b: long hole for tilt adjustment
16, 16a, 16b, 16c, 16d: long hole for telescopic adjustment
17, 17a, 17b: adjustment rod
18, 18a, 18b: outer column
19, 19a: inner column
20, 20a: slit
21, 21a, 21b, 21c: clamped part
22, 22a, 22b, 22c: support plate part
23: adjustment lever
24, 24a: nut
25: pressing plate
26, 26a: thrust bearing
27: electric motor
28: outer shaft
29: inner shaft
30: attachment plate part
31: coupling plate part
32: separation capsule
33: non-circular part
34: head part
35a, 35b: flat surface part
36a, 36b: pressing curved surface part
37, 37a, 37b, 37c: driven-side cam
38, 38c: drive-side cam
39, 39a, 39b, 39c, 39d, 39e: lock mechanism
40: drive-side engaging convex part
41: lever-side through-hole
42, 42a: fixed-side tooth part
43, 43a: moveable-side lock member
44, 44a, 44b, 44c: concave part
45: main body part
46: wedge part
47a, 47b: support part
48a, 48b: arm part
49: moveable-side tooth part
50: support hole
51: second fixed-side tooth part
52: fixed-side friction surface
53: moveable-side friction surface
54a, 54b: concave part
55: wedge-shaped part
56: guide protrusion
57: cam device
58: central hole
59: central hole
60a, 60b: guide convex part
61: rectangular frame-shaped convex part
62: front side frame part
63: rear side frame part

## Claims

1. A position adjustment device for steering wheel comprising:
a displacement bracket which is fixed to a steering column and which is formed with a first through-hole;
a fixed-side bracket which has a pair of support plate parts provided with clamping the displacement bracket from both sides in a width direction, which is formed with a pair of second through-holes, and which is fixed to a vehicle body side;
an adjustment rod which is provided with being inserted in the first through-hole and the pair of second through-holes in the width direction;
a pair of pressing parts which is provided at both end portions of the adjustment rod which protrude from outer surfaces of the pair of support plate parts; and
an expansion/contraction device which is configured to expand and contract an interval between the pair of pressing parts,
wherein at least one through-hole of the first through-hole and the pair of second through-holes is a long hole for adjustment that is long in a position adjustment direction which is a direction in which a position of the steering wheel can be adjusted,
wherein an unlocked state in which the steering wheel can be positionally adjusted in the position adjustment direction and a locked state in which the steering wheel can be kept at a position after adjustment can be switched each other on the basis of expansion/contraction of the interval between the pair of the pressing parts by the expansion/contraction mechanism,
wherein the position adjustment device comprises a lock mechanism configured to prevent the displacement bracket from being displaced relative to the fixed-side bracket in the position adjustment direction, in the locked state,
wherein the lock mechanism comprises a fixed-side engagement part and a moveable-side lock member;
wherein the fixed-side engagement part is provided directly or via another member to a bracket, which has the long hole for adjustment formed therein, of the fixed-side bracket or the displacement bracket,
wherein the moveable-side lock member has a moveable-side engagement part capable of friction engagement or concave-convex engagement with the fixed-side engagement part, and is supported to the adjustment rod in a state where the moveable-side lock member can be synchronously displaced in the position adjustment direction and in a rotation direction about a central axis of the adjustment rod,
wherein when switching from the unlocked state to the locked state, the moveable-side lock member rotates in a locking direction, so that the fixed-side engagement part and the moveable-side engagement part are friction-engaged or concave-convex-engaged so as to prevent displacement of the adjustment rod in the position adjustment direction, and
wherein when switching from the locked state to the unlocked state, the moveable-side lock member rotates in an unlocking direction, so that the friction engagement or the concave-convex engagement between the fixed-side engagement part and the moveable-side engagement part is released.

2. The position adjustment device for steering wheel according to claim 1,
wherein in the locked state, a rotating force in the locking direction is applied to the moveable-side lock member based on a force to be applied to the adjustment rod in the position adjustment direction.

3. The position adjustment device for steering wheel according to claim 1 or 2,
wherein a part, which is to align in the position adjustment direction with an engagement part between the fixed-side engagement part and the moveable-side engagement part in the locked state, of the moveable-side lock member has a thickness which increases in a direction perpendicular to the position adjustment direction as a distance from the central axis of the adjustment rod in the position adjustment direction increases, and
wherein a wedge effect between the fixed-side engagement part and the adjustment rod is generated on the basis of a force to be applied to the adjustment rod in the position adjustment direction.

4. The position adjustment device for steering wheel according to any one of claims 1 to 3,
wherein the moveable-side lock member is arranged with being retained in the width direction:
between an outer surface in the width direction of at least one support plate of the pair of support plate parts configuring the fixed-side bracket and a pressing part, which is provided at an outer side of the one support plate part in the width direction, of the pair of pressing parts; or
between an inner surface of the one support plate part in the width direction and an outer surface of the displacement bracket in the width direction facing the inner surface of the one support plate part in the width direction.

5. The position adjustment device for steering wheel according to any one of claims 1 to 4,
wherein the fixed-side engagement part is configured by a fixed-side friction surface formed to be parallel in the position adjustment direction.

6. The position adjustment device for steering wheel according to any one of claim 5,
wherein the moveable-side engagement part is configured so that a distance from the central axis of the adjustment rod increases from a position, at which the moveable-side engagement part is to be friction-engaged with the fixed-side engagement part in the locked state, toward an opposite direction to the locking direction.

7. The position adjustment device for steering wheel according to any one of claims 1 to 6,
wherein the fixed-side engagement part is configured by a first fixed-side engagement part and a second fixed-side engagement part,
wherein the moveable-side engagement part is configured by a first moveable-side engagement part and a second moveable-side engagement part, and
wherein in the locked state, the first moveable-side engagement part and the first fixed-side engagement part are engaged, and the second moveable-side engagement part and the second fixed-side engagement part are engaged.

8. The position adjustment device for steering wheel according to any one of claims 1 to 7,
wherein the moveable-side lock member has an elastic arm part, and
wherein the moveable-side lock member is supported to the adjustment rod via the elastic arm part.
